# EUROPÄISCHE PATENTANMELDUNG

(11) **EP 4 806 770 A1**
(43) Veröffentlichungstag der Anmeldung: **16.09.2026**
(21) Anmeldenummer: 26162336.7
(22) Anmeldetag: 04.03.2026
(51) Int. Cl.: B62D 65/06, B62D 65/02, B60J 5/04, B62D 29/04

(54) **RAHMENSYSTEM FÜR EINE FAHRZEUGKLAPPE UND EIN HERSTELLUNGSVERFAHREN FÜR FAHRZEUGBAUPLATTEN AUFWEISEND EIN SOLCHES RAHMENSYSTEM**

(30) Priorität: 15.03.2025 LU 103553
(71) Anmelder: Krumm, Achim, 72348 Rosenfeld (DE)
(72) Erfinder: Krumm, Achim, 72348 Rosenfeld (DE)
(74) Vertreter: Paustian & Partner Patentanwälte mbB

(57) **Zusammenfassung**

Die Erfindung betrifft ein Rahmensystem für eine Fahrzeugklappe umfassend zumindest ein Profilstück und zumindest eine Positionierhilfe. Dabei ist die Positionierhilfe mit dem Profilstück verbindbar. Die Erfindung betrifft ebenfalls ein Herstellungsverfahren für Fahrzeugbauplatten aufweisend ein solches Rahmentsystem.

## Beschreibung

Die vorliegende Erfindung bezieht sich auf ein Rahmensystem für eine Fahrzeugklappe und ein Herstellungsverfahren für Fahrzeugbauplatten aufweisend ein solches Rahmensystem. Insbesondere bezieht sich die vorliegende Erfindung auf ein Rahmensystem für eine Fahrzeugklappe mit Positionierhilfe.

Eine weitverbreitete Bauweise zur Herstellung von Fahrzeugkabinen, wie Wohnkabinen für Reisefahrzeuge ist die Fahrzeugkabinen aus Sandwichplatten, sogenannten Fahrzeugbauplatten aufzubauen. Grundsätzlich umfassen diese Fahrzeugbauplatten meist zwei Decklagen und eine zwischenliegende Isolierschicht aus Isoliermaterial, zumeist Schaum. Die Decklagen können aus einem sehr breiten Feld gewählt und kombiniert werden. Häufig sind Decklagen aus Faserverstärkten Kunststoff (z.B. GfK) oder Aluminium. Es sind aber auch Holzwerkstoffe oder andere geeignete Werkstoffe bekannt. Diese werden üblicherweise schichtweise aufeinandergelegt, verklebt und dann (zumeist vermittels Vakuum) miteinander verpresst. Da bevorzugt die Flächen bzw. Seiten einer Fahrzeugkabine aus einer einzelnen Platte bestehen sollen (Stabilität, Dichtigkeit, etc.), werden großformatige Fahrzeugbauplatten hergestellt.

Öffnungen in den Fahrzeugbauplatten für die notwendigen Türen, Fenster und Stauklappen benötigen zumindest einen Rahmen, der die notwendige Stabilität erzeugt, da eine Sandwichplatte oben beschriebener und üblicher Art instabil ist, wenn eine Öffnung für z.B. eine Stauklappe eingebracht wird. Bekanntermaßen ist es weiterhin wünschenswert, dass die Füllung bzw. der bewegliche Teil einer Fahrzeugklappe (z.B. Stauklappe oder Tür) aus dem gleichen Material gefertigt ist, wie der Rest der Fahrzeugbauplatte, da so z.B. das Risiko für unterschiedliches thermisches Verhalten minimiert wird. Den Rahmen kommt hierbei entscheidende Bedeutung zu, da diese möglichst nicht sichtbar sein sollen, damit die Fahrzeugbauplatte bei geschlossener Klappe wie eine Fläche aussieht. Dies wird über z.B. innenliegende Dichtungen und Scharniere erreicht. Weiterhin kommt dem zumindest einen Rahmen weitere Bedeutung bei der Minimierung von Kältebrücken zu. Grundsätzlich sind Fahrzeugklappen einfache geometrische und meist auch regelmäßige Formen, wie z.B. Rechtecke. Es gibt auch Klappen mit einer Schräge, wenn die Klappe zum Beispiel im Bereich einer Heckschräge des Fahrzeugs befindlich ist.

Die vorliegende Anmeldung hat es daher zur Aufgabe ein Rahmensystem für Fahrzeugklappen und ein Herstellungsverfahren für Fahrzeugbauplatten aufweisend ein solches Rahmensystem vorzuschlagen, mit dem Fahrzeugklappen einfacher in Fahrzeugbauplatten eingebracht bzw. Fahrzeugbauplatten mit Klappen einfacher hergestellt werden können. Diese Aufgabe wird durch ein Rahmensystem und ein Herstellungsverfahren entsprechend den beigefügten unabhängigen Ansprüchen gelöst.

Nach einem Aspekt der vorliegenden Anmeldung umfasst ein Rahmensystem für eine Fahrzeugklappe zumindest ein Profilstück und zumindest eine Positionierhilfe. Dabei ist die Positionierhilfe mit dem Profilstück verbindbar. Die Verbindung kann formschlüssig, stoffschlüssig oder kraftschlüssig sein. Dies kann den Vorteil haben, dass eine Positionierung der Profilstücke einfach möglich ist und besagte Position durch die Positionierhilfen gekennzeichnet bzw. wenn diese z.B. aufgeklebt werden, festgelegt werden kann und das Profilstück wieder abgenommen werden kann. Die Positionierhilfe kann z.B. das Rahmensystem bezüglich einer Fahrzeugbauplatte oder einer Deckschicht einer Fahrzeugbauplatte positionieren. Die Positionierhilfe kann dazu vorgesehen und geeignet sein an einer Fahrzeugbauplatte oder einer Deckschicht einer Fahrzeugbauplatte befestigt zu werden (z.B. geklebt).

Nach einem weiteren Aspekt der vorliegenden Anmeldung ist bei einem Rahmensystem die zumindest eine Positionierhilfe über einen Anschlag an dem zumindest einen Profilstück mit dem Profilstück verbindbar. Die Verbindung kann bündig sein. Dies kann den Vorteil haben, dass die Positionierung des Profilstücks einfacher und sicher in der Anwendung ist.

Nach einem weiteren Aspekt der vorliegenden Anmeldung ist bei einem Rahmensystem der Anschlag eine Aussparung in dem zumindest einen Profilstück. Dies kann z.B. eine Tasche im Profilstück oder ein Vorsprung am Profilstück sein. Dies kann den Vorteil haben, dass die Anwendung des Systems und Positionierung einfacher ist.

Nach einem weiteren Aspekt der vorliegenden Anmeldung ist bei einem Rahmensystem die Positionierhilfe dazu vorgesehen und geeignet mit einer Deckschicht einer Fahrzeugbauplatte verbunden zu werden. Die Verbindung kann z.B. über Klebstoff erfolgen. Dies kann den Vorteil haben, dass die Handhabung des Systems vereinfacht wird.

Nach einem weiteren Aspekt der vorliegenden Anmeldung ist bei einem Rahmensystem das zumindest eine Profilstück ein Eckprofilstück oder ein gerades Profilstück. Dies kann den Vorteil haben, dass die Handhabung des Rahmensystems flexibler wird und auf den jeweiligen Einbauort angepasst werden kann.

Nach einem Aspekt der vorliegenden Anmeldung umfasst ein Herstellungsverfahren für Fahrzeugbauplatten die Schritte:
- Auslegen einer ersten Deckschicht einer Fahrzeugbauplatte;
- Positionieren von zumindest einem Profilstück umfassend zumindest eine Positionierhilfe auf der ersten Deckschicht;
- Befestigen der Positionierhilfe an der ersten Deckschicht;
- Abnehmen des Profilstücks;
- Aufbringen einer Kleberschicht auf die erste Deckschicht;
- Aufsetzen des Profilstücks auf die Kleberschicht und die Positionierhilfe;
- Auflegen von Isoliermaterial auf die erste Deckschicht bzw. Kleberschicht;
- Aufbringen einer Kleberschicht auf das Profilstück und das Isoliermaterial;
- Auflegen einer zweiten Deckschicht auf die Kleberschicht bzw. das Isoliermaterial und das Profilstück;
- Verpressen der zwei Deckschichten mit zwischengeordnetem Isoliermaterial und Profilstück.

Dies kann den Vorteil haben, dass eine Fahrzeugbauplatte mit einer Fahrzeugklappe auf einfache Weise mit hoher Anwendungssicherheit erlangt werden kann. Das zumindest eine Profilstück wird auf der Deckschicht positioniert. Dabei kann das zumindest eine Profilstück bereits mit der zumindest einen Positionierhilfe verbunden sein oder das zumindest eine Profilstück wird nach dem Positionieren des Profilstücks auf der ersten Deckschicht mit der zumindest einen Positionierhilfe verbunden. Nachfolgend wird die Positionierhilfe an die Deckschicht befestigt, dies kann z.B. durch einen z.B. schnellabbindenden Kleber erfolgen. Damit ist die Position des Profilstücks auf der ersten Deckschicht festgelegt und das Profilstück kann abgenommen werden. Üblicherweise wird dann eine Kleberschicht auf die erste Deckschicht aufgebracht mit dem die Isolierung, etwaige Einlegeteile und auch das zumindest eine Profilstück mit der ersten Deckschicht verklebt wird.

Danach wird das zumindest eine Profilstück auf den aufgetragenen Kleber wieder mit der zumindest einen dort bereits befindlichen Positionierhilfe in Verbindung gebracht bzw. aufgesetzt. Nachfolgend wird das Isoliermaterial auf die erste Deckschicht mit der Kleberschicht aufgelegt und üblicherweise auch an das Rahmensystem angelegt. Hier bietet das vorgeschlagene System den Vorteil, dass durch das Anlegen der Isolierung das im Kleberbett verschiebliche Rahmensystem wegen der auf der ersten Deckschicht fixierten zumindest einen Positionierhilfe nicht verschoben werden kann.

Nach einem weiteren Aspekt der vorliegenden Anmeldung wird bei einem Herstellungsverfahren beim Aufsetzen die zumindest eine Positionierhilfe in einer Aussparung des Profilstücks angeordnet. Dies kann den Vorteil haben, dass ein genauer Sitz und einfache Handhabung erreicht werden können.

Nach einem weiteren Aspekt der vorliegenden Anmeldung wird bei einem Herstellungsverfahren beim Aufsetzen der zumindest einen Positionierhilfe mit einem Eckprofilstück und/oder mit einem geraden Profilstück in Verbindung gebracht. Dies kann den Vorteil haben, dass das Herstellungsverfahren für den jeweiligen Einsatzzweck (z.B. Zugänglichkeit) angepasst werden kann.

Zum besseren Verständnis der Erfindung wird diese anhand der nachfolgenden Figuren näher erläutert. Es zeigen jeweils in stark vereinfachter, schematischer Darstellung:
Fig. 1 eine Ansicht von unten eines Rahmensystems.
Fig 2 Seitenansichten des in Fig. 1 dargestellten Rahmensystems.
Fig. 3 eine Schnittansicht von der Seite einer Fahrzeugbauplatte.
Fig. 4 ein Ablaufdiagramm eines Herstellungsverfahrens.

Einführend sei festgehalten, dass die in der Beschreibung gewählten Lageangaben, wie z.B. oben, unten, seitlich usw. auf die unmittelbar beschriebene sowie dargestellte Figur bezogen sind und diese Lageangaben sind bei einer Lageänderung sinngemäß auf die neue Lage zu übertragen.

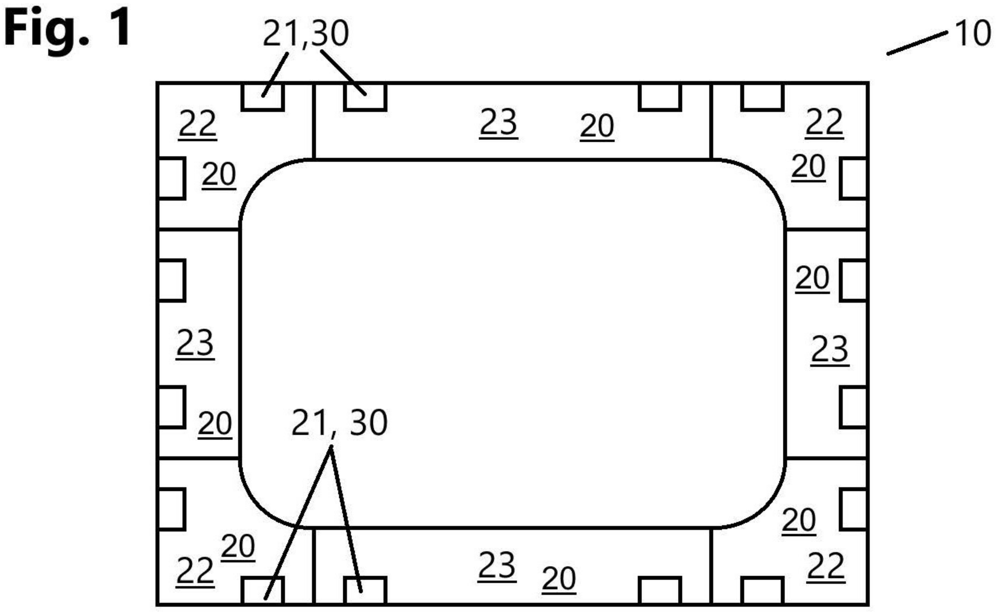

Es wird anfänglich Bezug genommen auf Fig. 1 in welcher ein Rahmensystem 10 umfassend Profilstücke 20, nämlich vier Eckprofilstücke 22 und vier gerade Profilstücke 23 gezeigt ist. Jedes der Profilstücke 22, 23 weist zwei Aussparungen 21 als Anschläge auf. Deren Anzahl und Anordnung ist beliebig. In die Aussparungen 21 sind Positionierhilfen 30 eingesetzt, die bündig mit der jeweiligen Aussparung 21 abschließen.

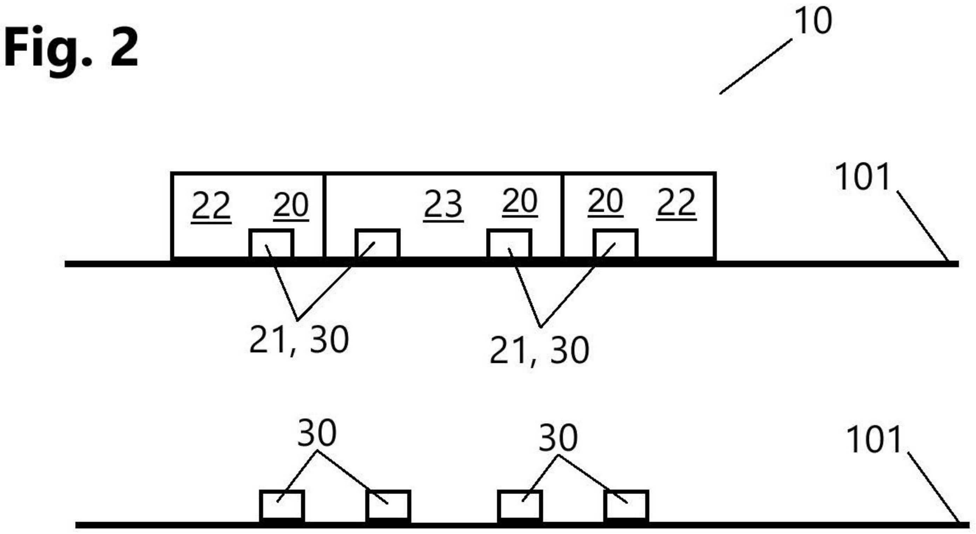

In Fig. 2 ist das Rahmensystem 10 der Fig. 1 in zwei Seitenansichten dargestellt. Dabei liegt das Rahmensystem 10 in der oberen Darstellung der Fig. 1 auf einer ersten Deckschickt 101 einer Fahrzeugbauplatte 100 auf. Die Positionierhilfen 30 sind in die jeweiligen Aussparungen 21 eingelegt und liegen ebenfalls auf der ersten Deckschickt 101 auf. In diesen Zustand können die Positionierhilfen 30 mit der ersten Deckschicht 101 verklebt bzw. an dieser befestigt werden und somit kann die Position des Rahmensystems 10 auf der ersten Deckschicht 101 festgelegt werden.

Dann kann das Rahmensystem 10 nach oben von der ersten Deckschicht 101 und den festgeklebten Positionierhilfen 30 abgehoben werden. Dies ist im unteren Teil der Fig. 2 dargestellt. Hier sind lediglich die Positionierhilfen 30, welche mit der ersten Decklage 101 verbunden sind, gezeigt. Die miteinander verbundenen Profilstücke bzw. Anordnung von Profilstücken (der Rahmen) können dann wieder positionsgenau auf die Positionierhilfen 30 und die erste Deckschicht 101 aufgelegt werden. Die befestigten Positionierhilfen 30 verhindern auch ein versehentliches Bewegen des Rahmensystems, wenn z.B. Isoliermaterial angelegt wird (nicht gezeigt in Fig. 2).

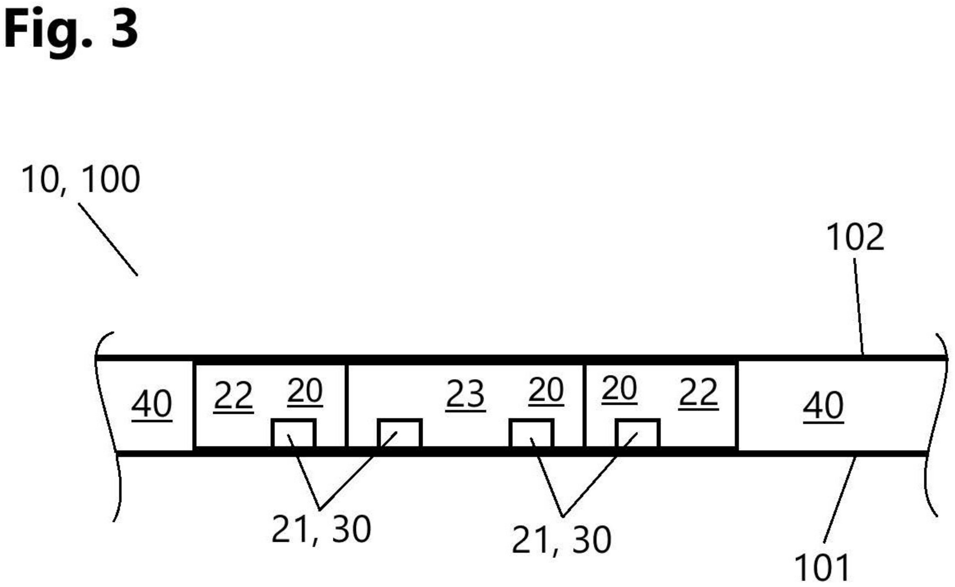

In Fig. 3 ist ein Teil einer Fahrzeugbauplatte 100 mit dem in Figs. 1 und 2 gezeigten Rahmensystem 10 gezeigt. Das Rahmensystem 10 ist mit einer zweiten Decklage 102 überdeckt und es ist jeweils von links und rechts Isoliermaterial angelegt. Zwischen den Decklagen 101, 102 und dem Rahmensystem 10 bzw. dem Isoliermaterial 40 ist Klebstoff angeordnet, um die Deckflächen 101, 102 flächig miteinander zu verkleben.

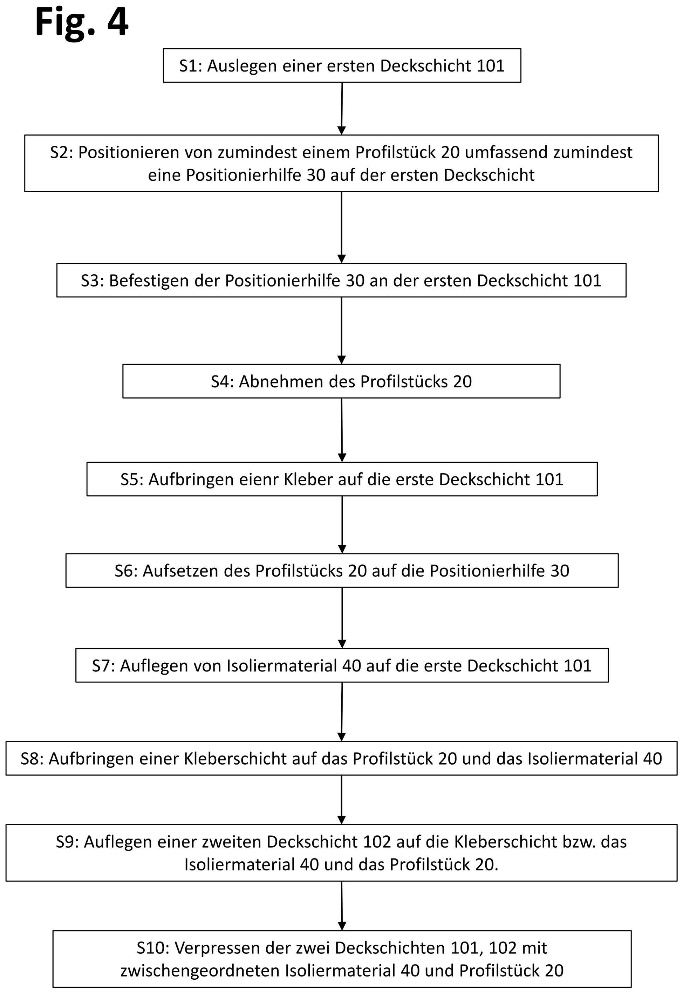

Fig. 4 zeigt ein Ablaufdiagramm eines Herstellungsverfahrens zum Herstellen einer Fahrzeugbauplatte 100 umfassend das Rahmensystem 10. In einem Schritt S1 wird eine erste Deckschicht 101 ausgelegt. In einem Schritt S2 wird zumindest ein Profilstück 20, meist eine Anordnung von Eckprofilstücken 22 und geraden Profilstücken 23 (der Rahmen) auf der ersten Deckschicht 101 wie gewünscht positioniert. Dabei können jeweils die Positionierhilfen 30 schon mit den Profilstücken 20 in Verbindung sein, z.B. in eine Aussparung 21 eingelegt, oder nicht. Bei einer Anordnung von Profilstücken 20 ähnlich zu Fig. 1 muss nicht jedes Profilstück 20 mit einer jeweiligen Positionierhilfe 30 verbunden sein oder verbunden werden können.

In einem Schritt S3 wird die Positionierhilfe 30 bzw. werden die Positionierhilfen 30 an die erste Decklage 101 befestigt. Dies erfolgt z.B. durch Kleben. Wenn im vorherigen Schritt die Positionierhilfe 30 nicht mit einem Profilstück 20 verbunden war, dann kann dies vor dem Befestigen erfolgen. Dies kann z.B. durch Einbringen in die Aussparung 21 erfolgen. Die Positionierhilfe 30 kann z.B. mit Kleber versehen in die Aussparung 21 eingesetzt und dann mit der ersten Deckschicht 101 verklebt werden.

In einem Schritt S4 wird das Profilstück 20 bzw. die Anordnung von Profilstücken (der Rahmen) von der ersten Deckschicht 101 und der darauf befestigten Positionierhilfe 30 bzw. Positionierhilfen 30 abgenommen. In einem Schritt S5 wird Kleber auf die erste Deckschicht 101 aufgebracht. Dieser Auftrag erfolgt für gewöhnlich flächig.

In einem Schritt S6 wir das Profilstück 20 bzw. der Rahmen auf die Positionierhilfe 30 bzw. Positionierhilfen 30 aufgelegt und diese z.B. mit den Aussparungen 21 der jeweiligen Profilstücke 20 in Verbindung gebracht. Damit wird das Profilstück 20 bzw. der Rahmen in das flächige Kleberbett auf der ersten Deckschicht 101 eingelegt und kann durch die Positionierhilfen nicht weggleiten. Auch dann nicht, wenn im nächsten Schritt S7 Isoliermaterial 40 auf die erste Decklage 101 aufgelegt wird und an das Profilstück 20 angelegt wird. Durch die Positionierhilfe 30 kann das Profilstück beim Anlegen des Isoliermaterials nicht wegrutschen.

In einem nachfolgenden Schritt S8 wird eine Kleberschicht auf das Rahmensystem 10 und die Isolierung 40 aufgebracht. In einem Schritt S9 wird die zweite Deckschicht 102 auf die Kleberschicht bzw. das Rahmensystem 10 und die Isolierung 40 aufgelegt. In einem nachfolgenden Schritt S10 werden die zwei Deckschichten 101 und 102 sowie das Rahmensystem 10 und die Isolierung 40 miteinander verpresst. Dies geschieht üblicherweise durch eine Vakuumpresse. Durch die Positionierhilfe(n) 30 kann auch in diesem Schritt das Rahmensystem 10 die Position in der Platte nicht versehentlich verändern.

Es sei an dieser Stelle bemerkt, dass die Erfindung nicht auf die speziell dargestellten Ausführungsvariante eingeschränkt ist, sondern Variationsmöglichkeiten aufgrund der Lehre zum technischen Handeln durch gegenständliche Erfindung im Können des auf diesem technischen Gebiet tätigen Fachmannes liegt. Die Offenbarung der Merkmale der Verfahrensansprüche kann mit den Merkmalen der Vorrichtungsansprüche kombiniert bzw. in diese übernommen werden und vice versa.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenliste

- 10: Rahmensystem
- 20: Profilstück
- 21: Anschlag / Aussparung
- 22: Eckprofilstück
- 23: gerades Profilstück
- 30: Positionierhilfe
- 40: Isoliermaterial
- 100: Fahrzeugbauplatte
- 101: erste Deckschicht
- 102: zweite Deckschicht

## Patentansprüche

1. Rahmensystem (10) für eine Fahrzeugklappe, umfassend zumindest ein Profilstück (20) und zumindest eine Positionierhilfe (30), wobei die Positionierhilfe mit dem Profilstück verbindbar ist.

2. Rahmensystem (10) nach Anspruch 1, wobei die zumindest eine Positionierhilfe (30) über einen Anschlag (21) an dem zumindest einen Profilstück (20) mit dem Profilstück verbindbar ist.

3. Rahmensystem (10) nach Anspruch 2, wobei der Anschlag (21) eine Aussparung in dem zumindest einen Profilstück (20) ist.

4. Rahmensystem (10) nach einem der vorangegangenen Ansprüche, wobei die Positionierhilfe (30) dazu vorgesehen und geeignet ist mit einer Deckschicht (101) einer Fahrzeugbauplatte (100) verbunden zu werden.

5. Rahmensystem (10) nach einem der vorangegangenen Ansprüche, wobei das zumindest eine Profilstück (20) ein Eckprofilstück (22) oder ein gerades Profilstück (23) ist.

6. Herstellungsverfahren für Fahrzeugbauplatten (100), umfassend die Schritte:
• Auslegen einer ersten Deckschicht (101) einer Fahrzeugbauplatte (100);
• Positionieren von zumindest einem Profilstück (20) umfassend zumindest eine Positionierhilfe (30) auf der ersten Deckschicht;
• Befestigen der Positionierhilfe mit der ersten Deckschicht;
• Abnehmen des Profilstücks;
• Aufbringen einer Kleberschicht auf die erste Deckschicht;
• Aufsetzen des Profilstücks auf die Positionierhilfe;
• Auflegen von Isoliermaterial (40) auf die erste Deckschicht;
• Aufbringen einer Kleberschicht auf das Profilstück und das Isoliermaterial;
• Auflegen einer zweiten Deckschicht (102) auf die Kleberschicht bzw. auf das Isoliermaterial und das Profilstück;
• Verpressen der zwei Deckschichten mit zwischengeordnetem Isoliermaterial und Profilstück.

7. Herstellungsverfahren nach Anspruch 6, wobei beim Aufsetzen die zumindest eine Positionierhilfe (30) in einer Aussparung (21) des Profilstücks (20) angeordnet wird.

8. Herstellungsverfahren nach Anspruch 6 oder 7, wobei beim Aufsetzen zumindest eine Positionierhilfe (30) mit einem Eckprofilstück (22) und/oder mit einem geraden Profilstück (23) in Verbindung gebracht wird.
